Europäisches Patentamt

European Patent Office

Office européen des brevets

(11) Veröffentlichungsnummer: **0 114 598**

**A1**

(12) **EUROPÄISCHE PATENTANMELDUNG**

(21) Anmeldenummer: 84100049.0

(22) Anmeldetag: 04.01.84

(51) Int. Cl.³: **C 08 L 55/02**
C 08 L 51/00, C 08 L 25/12
C 08 L 25/16

(30) Priorität: 15.01.83 DE 3301161

(43) Veröffentlichungstag der Anmeldung:
01.08.84 Patentblatt 84/31

(84) Benannte Vertragsstaaten:
BE DE FR GB IT NL

(71) Anmelder: BAYER AG
Konzernverwaltung RP Patentabteilung
D-5090 Leverkusen 1 Bayerwerk(DE)

(72) Erfinder: Wingler, Frank, Dr.
Walter-Flex-Strasse 17
D-5090 Leverkusen 1(DE)

(72) Erfinder: Koch, Otto, Dr.
Morgengraben 12
D-5000 Köln 80(DE)

(72) Erfinder: Doering, Joachim, Dr.
Silesiusstrasse 78
D-5000 Köln 80(DE)

(72) Erfinder: Ott, Karl-Heinz, Dr.
Paul-Klee-Strasse 54
D-5090 Leverkusen 1(DE)

(72) Erfinder: Liebig, Lothar, Dr.
Am Katterbach 26
D-5060 Bergisch Gladbach 2(DE)

(54) **Thermoplastische Formmassen.**

(57) Thermoplastische, schlagzähe Formmassen aus (A) 5 - 80 Gew.-Teilen eines Pfropfproduktes von 70 - 30 Gew.-% eines Gemisches aus einem Vinylaromaten und Acrylnitril und/oder Methacrylnitril auf 30 - 70 Gew.-% eines Kautschuks mit einer Glasübergangstemperatur von unter −10°C also Pfropfgrundlage und (B) 20 - 95 Gew.-Teilen eines Terpolymeren aus Styrol und/oder α-Methylstyrol, p-Methylstyrol und Acrylnitril und/oder Methacrylnitril, wobei das Terpolymerisat durch Massepolymerisation hergestellt worden ist, und ein Verfahren zu ihrer Herstellung.

EP 0 114 598 A1

0114598

BAYER AKTIENGESELLSCHAFT          5090 Leverkusen, Bayerwerk

Konzernverwaltung RP
Patentabteilung                   G/Kü-c


Thermoplastische Formmassen


Gegenstand der Erfindung sind thermoplastische, schlagzähe Formmassen aus


(A)    5 bis 80 Gew.-Tln. eines Pfropfproduktes von 70 bis
       30 Gew.-% eines Gemisches aus


       a) mindestens einem Vinylaromaten und
       b) Acrylnitril und/oder Methacrylnitril

       auf 30 bis 70 Gew.-% eines Kautschuks mit
       einer Glasübergangstemperatur von unter
       -10°C als Pfropfgrundlage und


(B)    20 bis 95 Gew.-Tln. eines Terpolymeren aus


       a) Styrol und/oder $\alpha$-Methylstyrol,
       b) p-Methylstyrol und
       c) Acrylnitril und/oder Methacrylnitril,


Le A 22 017 - Ausland

wobei das Terpolymerisat durch Massepolymerisation hergestellt worden ist und die folgende Zusammensetzung aufweist:

a) 20 bis 40 Gew.-Tle. Styrol und/oder $\alpha$-Methylstyrol im molaren Verhältnis von 0 : 1 bis 1 : 1,
b) 20 bis 50 Gew.-Tle. p-Methylstyol und
c) 10 bis 40 Gew.-Tle. Acrylnitril und/oder Methacrylnitril,

wobei die Summe der Gew.-Tle. a) bis c) 100 beträgt.

Thermoplastisch verarbeitbare Zweiphasenkunststoffe mit Wärmeformbeständigkeiten über 100°C nach Vicat B sind bekannt und werden im Automobilbau, bei der Herstellung von Haushaltsartikeln und elektronischen Geräten bevorzugt eingesetzt. Solche Formmassen bestehen aus einem wärmeformbeständigen Harz ("Harzmatrix"), in das Kautschukteilchen zur Schlagzähmodifizierung eingebettet sind. Der Kautschuk wird in der Regel durch Pfropfpolymerisation der Harzmonomeren verträglich gemacht. Als wärmeformbeständige Harze werden vorzugsweise Copolymerisate des Styrols mit Maleinsäureanhydrid, Acrylnitril oder Methacrylnitril, sowie Copolymere des $\alpha$-Methylstyrols mit Acrylnitril und gegebenenfalls Styrol verwendet. Wärmeformbeständige Harze auf Basis von $\alpha$-Methylstyrol besitzen ein besonderes technisches Interesse.

Gängige Techniken zur Herstellung von Copolymerisaten sind die Emulsions-, Perl-, Masse-Perlpolymerisation, so-

Le A 22 017

wie die Massepolymerisation, wobei die letzte Verfahrensweise besonders interessant ist.

Die Massepolymerisation liefert höhere Raumzeitausbeuten als die Emulsionspolymerisation und ist daher auch wirtschaftlicher. Ein weiterer Vorteil der Massepolymerisation ist der Wegfall von Abwässern und Trocknungsgasen. Die Massepolymerisation gestattet es, chemisch einheitliche Copolymere aus Monomeren mit verschiedenem Polymerisationsverhalten herzustellen (vergl. DE-AS 27 24 360).

Es hat sich gezeigt, daß $\alpha$-Methylstyrol in Masse, auch in Gegenwart von Nitrilgruppen tragenden Monomeren, wie z.B. Acrylnitril oder Methacrylnitril, nur äußerst langsam radikalisch polymerisiert werden kann, daß die Polymerisation nur unter hohem Verbrauch an in Radikale zerfallenden Initiatoren wie Dialkylperoxide, Alkylhydroperoxide, Perester, Perketale, Azoinitiatoren etc. verläuft und dabei Produkte mit zu kleinen Molmassen entstehen, nämlich unter 70 000 (Gewichtsmittel).

Harze mit zu kleinen mittleren Molmassen besitzen ungenügende Festigkeit und sind für die Herstellung von schlagzähen Formmassen nicht brauchbar.

Homo- und Copolymere des p-Methylstyrols sind bekannt und haben gegenüber Styrolpolymeren höhere Wärmeformbeständigkeit. Statistische Copolymere aus p-Methylstyrol mit einer Reihe von Comonomeren, wie Styrol, $\alpha$-Methylstyrol, Acrylaten, Methacrylaten, Acrylnitril, Methacryl-

Le A 22 017

nitril, Butadien, Isopren, Chloropren, Ethylen, Propylen, herzustellen, ist ebenfalls bekannt. Auch Pfropfpolymerisate von Vinyltoluolen auf Kautschuke sind bereits beschrieben worden (vergl. US-PS 4 230 836).

Der vorliegenden Erfindung liegt die Erkenntnis zugrunde, daß thermoplastische, Nitrilgruppen enthaltende, mit Pfropfkautschuk schlagzäh modifizierte Formmassen auf Basis von Terpolymerisaten aus

a)  $\alpha$ -Methylstyrol und

b)  p-Methylstyrol und

c)  Acrylnitril und/oder Methacrylnitril

besonders vorteilhaft sind, weil sie einfach herstellbar (durch Massepolymerisation) sind und hohe Wärmeformbeständigkeit, hervorragende mechanische Festigkeit und gute Verarbeitbarkeit besitzen.

Die Pfropfprodukte (A) der erfindungsgemäßen Formmassen enthalten bevorzugt, in polymerisierter Form, ein Gemisch aus

90 bis 60 Gew.-% Styrol und/oder $\alpha$ -Methylstyrol und/oder
            p-Methylstyrol und

10 bis 40 Gew.-% Acrylnitril und/oder Methacrylnitril

als Pfropfreis und als Pfropfgrundlage ein Butadien-Homopolymerisat oder Copolymerisat, mit 5 bis 45 Gew.-% Comonomer in statistischer oder segmentierter Verteilung, oder Polyisopren, Ethylen/Propylen-Copolymerisat,

Le A 22 017

Ethylen/Propylen-Terpolymerisat (EPDM), chloriertes Poly-ethylen, Ethylen/Vinylacetat-Copolymerisat, Polypentenamer, Ethylen-cyclopenten-Copolymerisat, Polycycloocten und Homo- sowie Copolymerisat von $C_2$-$C_8$-Alkyl-acrylaten.

In den Terpolymeren (B) kann Styrol im Anteil a) zu 0 bis 100 Gew.-% durch Acrylsäure- und Methacrylsäurealkylester, -cyclohexylester, -phenylester und -benzylester, insbesondere -alkylester mit 1 bis 12 C-Atomen in der Alkoholkomponente, weiter (Meth)Acrylsäure, (Meth)Acrylsäureamid, N-Alkyl-(Meth)Acrylamid, mit 1-8 C-Atomen im Alkylrest, N-Dialkyl-(meth)acrylamide mit 1-8 C-Atomen in den Alkylresten, o-, m-, p-Chlorstyrol, o- und p-Cyanostyrol, o-, m-, p-Methoxystyrol, p-Isopropylstyrol und 2,5-Dimethoxystyrol ersetzt sein.

Bevorzugt sind:
Methylmethacrylat, Methylacrylat, Acrylsäure, Methacrylsäure, Acrylamid, Methacrylamid, N-Alkyl-, N-Cycloalkyl- oder N-Arylmaleinimid, Maleinsäure, Fumarsäure, Maleinsäureanhydrid, wobei der Anteil im Falle von Maleinsäureanhydrid 7,5 % nicht übersteigen soll. Die Terpolymerisate müssen chemisch einheitlich sein, d.h. die Monomeren sollen in allen Molekülketten mit etwa derselben statistischen Verteilung und in gleichen Anteilen einpolymerisiert sein.

Zur Herstellung der erfindungsgemäßen Formmassen kann man den gepfropften Kautschuk in der Schmelze in Knetern, Innenmischern, auf Walzen oder Extrudern mischen.

Le A 22 017

Die Pfropfprodukte (A) sind bekannt. Sie können erhalten werden durch Polymerisation von

a) Styrol und/oder $\alpha$-Methylstyrol und/oder p-Methylstyrol und

b) Acrylnitril und/oder Methacrylnitril

in Gegenwart eines Kautschuks. Diesen Kautschuk bezeichnet man auch als Pfropfsubstrat. Man beobachtet, daß bei der Pfropfpolymerisation auf das Substrat nicht die gesamten Monomeren aufgepfropft werden, sondern daß ein Teil zu einem freien Harz polymerisiert. Die Pfropfpolymerisation kann in Substanz, Emulsion, Suspension, Lösung, sowie in kombinierten Verfahren wie Masse/Suspensionspolymerisation oder Lösungs-/Fällungspolymerisation durchgeführt werden. Man verwendet meist Radikale bildende Initiatoren. Auf Polybutadiene- bzw. Styrol-Butadien-Copolymerisate wird bevorzugt in Emulsion gepfropft, auf Ethylen/Vinylacetat-Copolymerisate, Ethylen-/Propylen-Copolymerisate und -Terpolymerisate bevorzugt in Lösung oder nach Lösungs-/Fällungs-Verfahren. Die Kautschuke sollen eine Glasübergangstemperatur von unter -10°C besitzen. Als Pfropfsubstrate werden Naturkautschuk und Synthesekautschuke in löslicher oder anvernetzter Form verwendet. Geeignete Synthesekautschuke sind Homo- und Copolymerisate von konjugierten Dienen mit 4 bis 8 Kohlenstoffatomen wie Butadien, Isopren und deren Copolymerisate mit Styrol und/oder Acrylnitril.

Die Copolymerisate können statistisch oder blockartig aufgebaut sein. Bei blockartigen Produkten kann es sich um

Le A 22 017

Zweiblockpolymere der Form AB oder auch um Dreiblockpolymere der Form ABA, sowie um sternförmige Blockpolymere
etwa der Formel $(ABA)_x Y$ handeln, wobei A z.B. für Styrol,
B für Butadien und Y für den Rest eines mehrfunktionellen
Kupplungsreagenzes, wie zum Beispiel $SiCl_4$, $S_2Cl_2$, Divinylbenzol, epoxidierte Fettsäuren u.a. steht; x liegt
in der Größenordnung von 2 bis 5. Bevorzugt werden Polybutadiene mit einem hohen cis-Anteil der Doppelbindungen
in der Polymerkette von über 55 %, wobei der Anteil an
1,2-Vinyl-Doppelbindungen 1 bis 15 %, bezogen auf alle
Doppelbindungen, betragen kann, sowie Styrol-Butadien-
Blockpolymere mit einem Styrolanteil von 5 bis 45 Gew.-%.

Eine weitere Klasse an Synthesekautschuken sind Ethylen-
Propylen-Co- und Terpolymere. Sie enthalten 70 bis 30
Gew.-Tle. Ethylen auf 30 bis 70 Gew.-Tle. Propylen.

Vorteilhaft sind Terpolymere mit 4 - 15 Gew.-% z.B. 5-
Ethylidennorbornen, Dicyclopentadien, Hexadien-1,4, 2,2,1-
Bicycloheptadien mit etwa 1 bis 20 C=C-Doppelbindungen pro
1000 Atome. Pfropfkomponenten auf Basis dieser sogenannten
EPDM- oder APTK-Kautschuke zeichnen sich durch besonders
gute Witterungsbeständigkeit aus. Zu den witterungsbeständigen Pfropfsubstraten gehören ebenfalls die Ethylenvinylacetat-Copolymerisate (EVA) und die Acrylat-Kautschuke. Die EVA-Copolymerisate enthalten 30 bis 85 % einpolymerisiertes Vinylacetat, können zur besseren Bepfropfbarkeit mit ungesättigten Carbonsäuren, z.B. Acryl-
oder Methacrylsäure seitenständig verestert sein. Die
EVA-Copolymerisate können auch teilverseift sein, mit

Le A 22 017

- 8 -

OH-Zahlen von 1 bis etwa 100 mg KOH/g Substanz. Bei den Acrylkautschuken handelt es sich meist um Polymerisate von $C_2$-$C_8$-Alkylestern der Acrylsäure, wie z.B. Ethyl-, n- oder iso-Propyl, n-Butyl, iso-Butyl, tert.-Butyl, 2-Ethylhexyl-acrylat. Comonomere sind u.a. Acrylnitril, Methacrylate mit 1 bis 18 C-Atomen im Ester-Teil, sowie $C_2$-$C_{18}$-Alkyl-vinylether.

Zur besseren Bepfropfbarkeit können auch die folgenden Comonomeren eingebaut sein: Dihydrodicyclopentadienyl-(meth)acrylat, Vinyl(meth)acrylat, Allyl(meth)acrylat, Divinylethylen-Harnstoff, Divinylpropylenharnstoff, Triallylphosphat, Triallylcyanurat, Triallylisocyanurat, als Vernetzerkomponente können die Acrylat-Elastomere mehrfunktionelle Acrylmonomere einpolymerisiert enthalten, wie z.B. Ethandiol-di(meth)acrylat, 1,4-Butandiol-di(meth)acrylat, 1,6-Hexandiol-di(meth)acrylat, Polyethylenglykol-di(meth)acrylate, 3-Methylpentadiol-di(meth)acrylat, Trimethylolpropantri(meth)acrylat, Pentaerythrittri- oder tetra-(meth)acrylat, 1,3,5-Triacryloylhexahydros-triazin. Die Acrylat-Elastomere können auch eine Kern-Schalen-Struktur oder Kern-Mantel-Struktur besitzen, z.B. aus einem weichen Kern mit einer harten, kernumhüllenden Schale bestehen, wie z.B. in der DE-OS 3 006 804 beschrieben ist. Weitere Acrylat-Grundlagen sind u.a. in den Schriften DE-AS 2 503 996, 2 826 925, 2 901 576, 2 846 754, 2 828 517 beschrieben.

Le A 22 017

Die Terpolymeren B der erfindungsgemäßen Formmassen bestehen aus einem Masse-Polymerisat aus

(a) ⍺-Methylstyrol, gegebenenfalls im Gemisch mit Styrol oder einem weiteren copolymerisierbaren Monomeren, (20 - 40 Gew. Tle.)

(b) p-Methylstyrol (20 - 50 Gew. Tle)

(c) Acrylnitril und/oder Methacrylnitril, (10 - 40 Gew. Tle.)

Die Molmassen-Verteilung soll möglichst eng, d.h. zwischen U = 0,5 bis 1,6, berechnet aus $U = \frac{\overline{M}_w}{\overline{M}_n} - 1$, sein. Die Intrinsicviskositäten liegen zwischen 0,4 und 1,1 dl/g, gemessen bei 25°C in Dimethylformamid. Die Harze besitzen eine Erweichungstemperatur nach Vicat von 110 bis 130°C. Sie können durch kontinuierliche Massepolymerisation, gegebenenfalls unter Zusatz eines Lösungsmittels, z.B. Methylethylketon oder Ethylbenzol, z.B. nach DE-AS 2 724 360 hergestellt werden. Die Formmasse kann hergestellt werden durch Mischen des Pfropfpolymerisates mit dem Terpolymerisat z.B. auf Walzen, Knetern, Innenmischern, Mischschneckenmaschinen.

Die Formmassen können übliche Stabilisatoren, Lichtschutz-, Alterungsschutzmittel, Verlaufs- und Verarbeitungshilfsmittel, Füllstoffe, mineralische sowie organische Faser- und Verstärkerfüllstoffe wie Glasfaser, Kohlenstoffaser, Metallwiskers, Polyester-, Polyamid-, Polyaramid-Faser etc., Pigmente ect. zugesetzt werden. Die Formmassen zeichnen sich durch hohe Wärmeformbeständigkeit, verbesserte Verarbeitbarkeit und große Fließlänge beim

0114598

Spritzguß von Formkörpern aus.

Die erfindungsgemäßen Formmassen sind insbesondere dort von Vorteil, wo es auf gute Witterungsbeständigkeit, hohe Wärmeformbeständigkeit, hohe Zähigkeit und leichte Verarbeitbarkeit ankommt. So können sie beispielsweise mit Vorteil zur Herstellung von Rohrleitungen, von hochwertigen Dichtungen, von Geschirr, von heißdampfsterilisierbaren Geräten, von Waschmaschinenteilen, von Batteriekästen, von Trockenbatteriegehäusen, von Gehäusen und anderen isolierenden Teilen in elektrisch betriebenen Maschinen, von Elektroisolierfolien, von verseifungsstabilen Behälterauskleidungen, chemisch und thermisch widerstandsfähigen Filtertüchern verwendet werden.

Bevorzugte Anwendungsgebiete sind der Bau von Fahrzeugteilen, der Automobil-, Kraftrad-, Flugzeug-, Eisenbahn-Bau, die Herstellung von kompliziert geformten Spritzgußteilen, von denen eine hohe Wärmeformbeständigkeit verlangt wird, wie z.B. Kühlergrille, Kotflügeleinlagen, Innenverkleidungen, Armaturentafeln, Haltegriffe, Autodächer, Abdeckungen, Gehäuse von Haushaltsgeräten und von Büromaschinen.

In den folgenden Beispielen sind, wenn nicht anders angegeben, Teile Gewichtsteile und Prozente Gewichtsprozente.

Le A 22 017

Herstellung des Terpolymerisats

In einem ummantelten Gefäß, das mit Innenthermometer, Rührer, Ein- und Auslaß versehen ist, werden 1000 Teile eine Monomerengemisches mit einer Zusammensetzung entsprechend Tabelle 1 vorgelegt und auf 130°C erwärmt. Dann wird ein Monomerstrom derselben Zusammensetzung so zudosiert und gleichzeitig dieselbe Menge an Polymerlösung dem Gefäß entnommen, daß sich eine Verweilzeit von 90 min. im Gefäß ergibt und der Füllstand gehalten wird. Dem Monomereintrittsstrom werden kontinuierlich ca. 0,01 Mol-% Azobisisobutyronitril zugefügt. Nach ca. 6h hat sich ein konstanter Umsatz von ca. 45 % eingestellt. Die Polymerlösung wird mit 0,1 Gew.-% 2,6 Di-t-butylp-kresol versetzt und anschließend auf einem Ausdampfextruder von Monomeren und flüchtigen Bestandteilen befreit.

Herstellung von Formmassen

Zur Herstellung der erfindungsgemäßen Formmassen werden die Harzkomponente und die Pfropfmischpolymerisate bei Temperaturen zwischen 170°C und 230°C auf den üblichen Verarbeitungsmaschinen wie Extrudern, Walzen und Knetern vermischt. Die Formmassen der Beispiele setzen sich zusammen aus 77,5 Teilen der Harzmatrix A und 22,5 Teilen eines Pfropfkautschuks B, hergestellt durch Pfropfung, und 50 Teilen Styrol und Acrylnitril im Verhältnis 72/28 auf 50 Teile eines in Emulsion polymerisierten Polybutadiens, wobei der mittlere Teilchendurchmesser der Pfropfgrundlage zwischen 0,1 und 0,4 μm liegt.

Le A 22 017

## Tabelle 1

| Nr. | ST | PMS | AMS | AN | MSA | Umsatz | Bemerkung |
|---|---|---|---|---|---|---|---|
| 1 | - | 40 | 30 | 30 | - | 52 | - |
| 2 | - | 35 | 30 | 35 | - | 40 | - |
| 3 | - | 30 | 40 | 30 | - | 43 | - |
| 4 | - | 35 | 35 | 30 | - | 45 | - |
| 5 | - | 32 | 30 | 35 | 3 | 42 | - |

### Vergleichsharze

| Nr. | ST | PMS | AMS | AN | MSA | Umsatz | Bemerkung |
|---|---|---|---|---|---|---|---|
| 6 | 30 | - | 40 | 30 | - | 40 | Masseharz |
| 7 | - | 40 | 30 | 30 | - | - | Emulsionsharz |
| 8 | 35 | - | 37 | 28 | - | - | Emulsionsharz |

ST     Styrol

PMS    p-Methylstyrol

AMS    $\alpha$-Methylstyrol

AN     Acrylnitril

MSA    Maleinsäureanhydrid

Beispiele

| Nr. | $a_n [kJ/m^2]$ | | $a_k [kJ/m^2]$ | | Vic. B | MFI |
|-----|-----|-----|-----|-----|-----|-----|
| | 20°C | -40°C | 20°C | -40°C | $[°C]$ | $[g/10\ min]$ |
| 1 | $(115)_2$ | 70 | 11,7 | 4,5 | 112 | 12,4 |
| 2 | $(97)_5$ | 54 | 12,1 | 4,4 | 111 | 9,1 |
| 3 | $(110)_8$ | 65 | 10,7 | 3,9 | 114 | 10,5 |
| 4 | $(105)_5$ | 72 | 11,5 | 4,2 | 112 | 11,0 |
| 5 | $(93)_3$ | 76 | 10,1 | 3,8 | 120 | 7,1 |

Vergleichsbeispiele

| Nr. | $a_n$ 20°C | -40°C | $a_k$ 20°C | -40°C | Vic. B | MFI |
|-----|-----|-----|-----|-----|-----|-----|
| 6 | 83 | 57 | 10,0 | 4,0 | 107 | 16,7 |
| 7 | $(102)_3$ | 63 | 10,3 | 3,9 | 109 | 8,5 |
| 8 | $(111)_2$ | 55 | 10,5 | 2,1 | 109 | 7,3 |

a Index n  Schlagzähigkeit nach DIN 53 453. Es wurden jeweils 10 Normkleinstäbe geprüft. Wenn nicht alle Stäbe bei einer gegebenen Schlagbeanspruchung gebrochen sind, ist die Schlagbeanspruchung in Klammern gesetzt und die Anzahl der gebrochenen Stäbe dahinter angegeben.

a Index k  Kerbschlagzähigkeit nach DIN 53 453

Vic. B  Wärmeformbeständigkeit nach Vicat B (DIN 53 460)

MFI  Melt Flow Index nach DIN 53 735 bei 240°C.

Le A 22 017

Patentansprüche

1.  Thermoplastische, schlagzähe Formassen aus

    A)  5 bis 80 Gew.-Teilen eines Pfropfproduktes von 70 bis 30 Gew.-% eines Gemisches aus

        a)  einem Vinylaromaten und
        b)  Acrylnitril und/oder Methacrylnitril

        auf 30 bis 70 Gew.-% eines Kautschukes mit einer Glasübergangstemperatur von unter -10°C als Pfropfgrundlage und

    B)  20 bis 95 Gew.-Teilen eines Terpolymeren aus

        (a)  Styrol und/oder $\alpha$-Methylstyrol,
        (b)  p-Methylstyrol und
        (c)  Acrylnitril und/oder Methacrylnitril,

        wobei das Terpolymerisat durch Massepolymerisation hergestellt worden ist und die folgende Zusammensetzung aufweist:

        a)  20 bis 40 Gew.-Teile Styrol und/oder $\alpha$-Methylstyrol im molaren Verhältnis von 0 zu 1 bis 1 zu 1,
        b)  20 bis 50 Gew.-Teile p-Methylstyrol und
        c)  10 bis 40 Gew.-Teile Acrylnitril und/oder Methacrylnitril, wobei die Summe der Gew.-Teile (a) bis (c) 100 beträgt.

Le A 22 017

2. Thermoplastische Formmassen nach Anspruch 1, dadurch gekennzeichnet, daß die Pfropfmonomeren des Pfropfkautschukes der Komponente (A) aus

90 bis 60 Gew.-% Styrol und/oder $\alpha$-Methylstyrol und/oder p-Methylstyrol und

10 bis 40 Gew.-% Acrylnitril und/oder Methacrylnitril bestehen.

3. Thermoplastische Formmassen nach Anspruch 1) bis 2), dadurch gekennzeichnet, daß in dem Terpolymer (B) Styrol im Anteil (a) zu 0 bis 100 Gew.-% durch ein copolymerisierendes Monomer aus der Gruppe: Methylmethacrylat, Methylacrylat, Maleinsäureanhydrid, N-Alkyl-, N-Cycloalkyl oder N-Arylmaleinimid, Acrylamid, Methacrylamid, Acrylsäure, Methacrylsäure ersetzt ist.

4.  Verfahren zur Herstellung von thermoplastischen, schlagzähen Formmassen, dadurch gekennzeichnet, daß man eine
    Mischung aus

    (a)  20 bis 40 Gew.-Teilen α-Methylstyrol und gegebenenfalls einem oder mehreren Monomeren aus
         der Gruppe Styrol, Acrylsäure und/oder
         Methacrylsäurealkylester, Cyclohexylester,
         Phenylester, Benzylester, Acryl- und/oder
         Methacrylsäure, Acryl- und/oder Methylsäureamide, N-alkylacrylamid und/oder Methacrylamid mit 1 bis 8 C-Atomen in der Alkylgruppe,
         o-, m- und p-Chlorstyrol, o- und p-Cyanostyrol, o-, m- und p-Methoxistyrol, p-Isopropylstyrol und 2,5-Dimethoxistyrol in
         einem molaren Verhältnis von 1:0 bis 1:1;

    (b)  20 bis 50 Gew.-Teilen p-Methylstyrol, und

    (c)  10 bis 40 Gew.-Teilen Acrylnitril und/oder Methacrylnitril

    - die Summe der Gewichtsteile von (a) bis (c) beträgt 100 - in Gegenwart eines Katalysators massepolymerisiert, und

         20 bis 95 Gew.-Teile des erhaltenen Terpolymers
         mischt mit 5 bis 80 Gew.-Teilen eines Pfropfproduktes
         von 70 bis 30 Gew.-% eines Gemisches aus

         (a)  einem Vinylaromaten und
         (b)  Acrylnitril und/oder Methacrylnitril

    auf 30 bis 70 Gew.-% eines Kautschuks mit einer Glasübergangstemperatur von unter -10°C als Pfropfgrundlage.

Europäisches
Patentamt

EUROPÄISCHER RECHERCHENBERICHT

**0114598**
Nummer der Anmeldung

EP 84 10 0049

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-1 224 486 (MONSANTO) * Anspruch; Spalte 9, Zeilen 23-26 * | 1,2 | C 08 L 55/02 C 08 L 51/00 C 08 L 25/12 C 08 L 25/16 |
| | --- | | |
| X | FR-A-2 254 604 (BAYER) * Ansprüche 1,6 * | 1,2 | |
| | --- | | |
| X | FR-A-2 055 421 (SUMITOMO) * Ansprüche 1,5,6 * | 1,3 | |
| | --- | | |
| X | EP-A-0 043 273 (JAPAN SYNTHETIC RUBBER) * Ansprüche * | 1,2 | |
| | ----- | | |

RECHERCHIERTE
SACHGEBIETE (Int. Cl. ³)

C 08 L

Der vorliegende Recherchenbericht wurde für alle Patentansprüche erstellt.

| Recherchenort | Abschlußdatum der Recherche | Prüfer |
|---|---|---|
| DEN HAAG | 21-03-1984 | FOUQUIER J.P. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82